# EUROPEAN PATENT SPECIFICATION

(11) **EP 4 095 380 B1**
(45) Date of publication and mention of the grant of the patent: **14.08.2024**
(21) Application number: 22173393.4
(22) Date of filing: 13.05.2022
(51) Int. Cl.: F04B 35/01, F04B 39/12

(54) **AIR COMPRESSOR**
LUFTKOMPRESSOR
COMPRESSEUR À AIR

(30) Priority: 24.05.2021 TW 110118732
(43) Date of publication of application: 30.11.2022
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- EP-A1- 3 670 911
- CN-U- 206 283 384
- KR-A- 20180 061 540
- US-A1- 2015 337 825
- US-A1- 2018 223 824
- US-A1- 2020 208 620

## Description

### FIELD OF THE INVENTION

The present invention relates to an air compressor which is capable of connecting the motor on the body securely without using any screws.

### BACKGROUND OF THE INVENTION

A conventional air compressor contains a body, a cylinder connected on the body, a motor fixed on the body, and a piston driven by the motor to move in the cylinder reciprocately, such that the motor actuates the piston to move in the cylinder reciprocately, thus sucking, compressing, and discharging airs. Furthermore, the air compressor is received in an accommodation box.

The motor is fixed on the body by screws, but it is easy to remove from the body after a period of using time. When the screws are inserted through the body to screw with multiple threaded orifices of a casing of the motor, a tool is difficult to screw the screws with the multiple threaded orifices in a limited space. Therefore, the motor cannot be fixed on the body by using the screws easily.

The present invention has arisen to mitigate and/or obviate the afore-described disadvantages.

Patent application publications US 2020/0208620 A1 and EP 3670911 A1 disclose air compressors having the features of the preamble of claim 1. From patent application publication KR 10-2018-0061540 A, a gear box for an electronical parking brake is known whose motor has extensions projecting toward a frame on which the motor is mounted.

### SUMMARY OF THE INVENTION

The primary aspect of the present invention is to provide an air compressor having the features of claim 1. Further embodiments of the air compressor according to the invention are subject-matter of the dependent claims. The air compressor comprises an accommodation box. The motor includes multiple coupling orifices defined thereon and configured to engage on the multiple posts of the body, and the motor further includes at least one locking extension configured to engage with the body, thus connecting the motor on the body securely without using any screws.

Further aspect of the present invention is to provide an air compressor by which the motor is removed from the body by using a removal tool, and the removal tool is configured to press the at least one locking extension away from the body, thus removing the motor from the body easily and quickly.

The accommodation box of the air compressor has two abutting portions formed on an inner wall of a first casing and an inner wall of a second casing of the accommodation box, and the two abutting portions are formed on the inner wall of the first casing and the inner wall of the second casing of the accommodation box, such that the two wings of the two locking extensions are defined between the motor and the body, and the air compressor is received in the accommodation box stably by using the two wings.

### BRIEF DESCRIPTION OF THE DRAWINGS

FIG. 1 is a perspective view showing the exploded components of a part of an air compressor that does not form part of the invention, but whose depiction is useful for understanding the invention.
FIG. 2 is another perspective view showing the exploded components of a part of the air compressor according to FIG. 1.
FIG. 3 is a perspective view showing the assembly of the air compressor according to FIG. 1.
FIG. 4 is a cross sectional view showing the assembly of the air compressor according to FIG. 1.
FIG. 5 is an amplified cross-sectional view showing the operation of a part of the air compressor according to FIG. 1.
FIG. 6 is a cross sectional view showing the operation of the air compressor according to FIG. 1.
FIG. 7 is a perspective view showing the exploded components of a part of an air compressor according to an embodiment of the present invention.
FIG. 8 is a perspective view showing the assembly of a part of the air compressor according to the embodiment of the present invention.
FIG. 9 is a cross sectional view of FIG. 7.
FIG. 10 is a cross sectional view of FIG. 8.
FIG. 11 is an amplified cross-sectional view showing the operation of a part of the air compressor according to the embodiment of the present invention.
FIG. 12 is a perspective view showing the operation of the air compressor of the present invention.
FIG. 13 is a cross sectional view of FIG. 12.

### DETAILED DESCRIPTION OF A PREFERRED EMBODIMENT

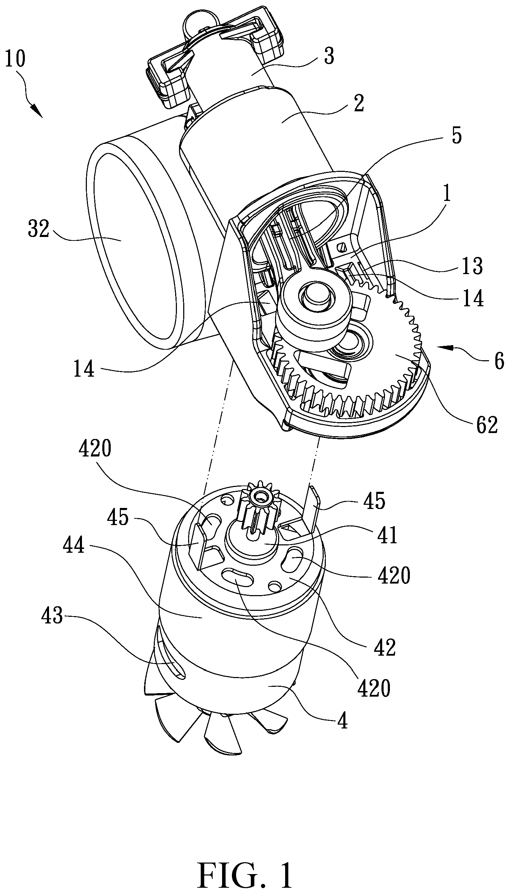

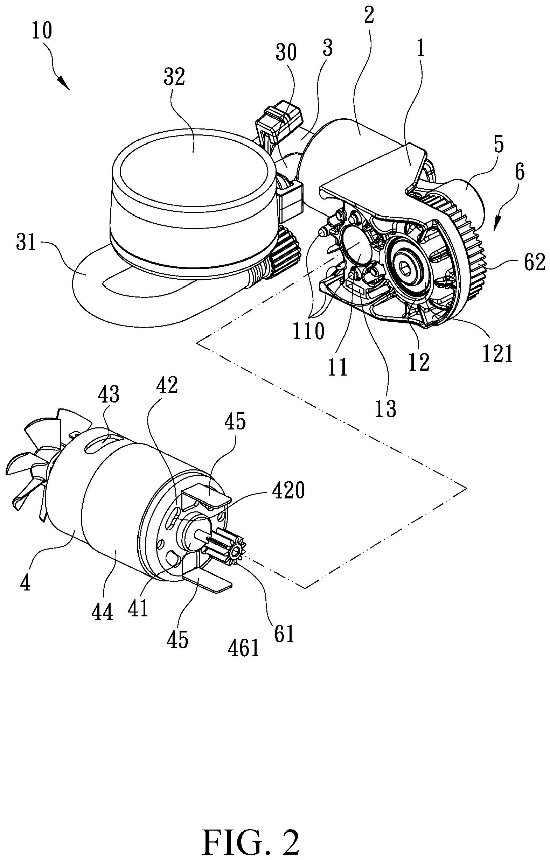

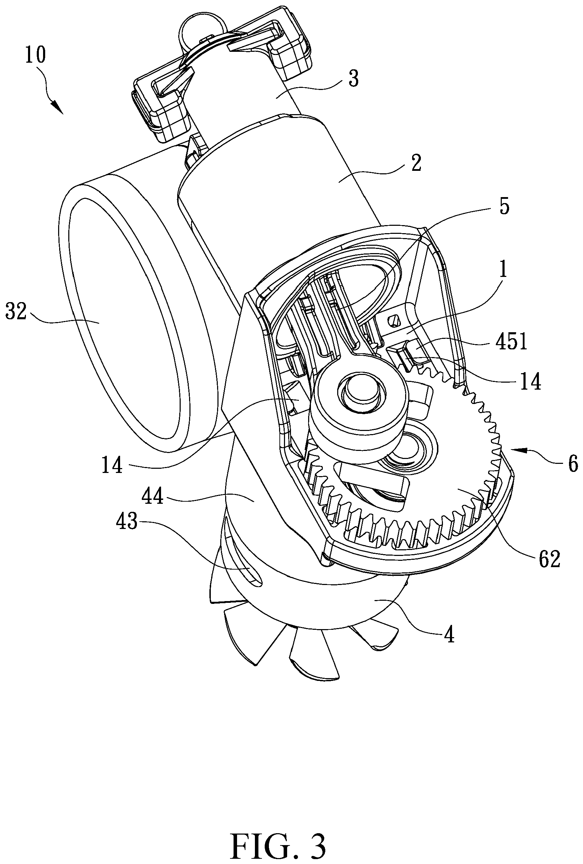

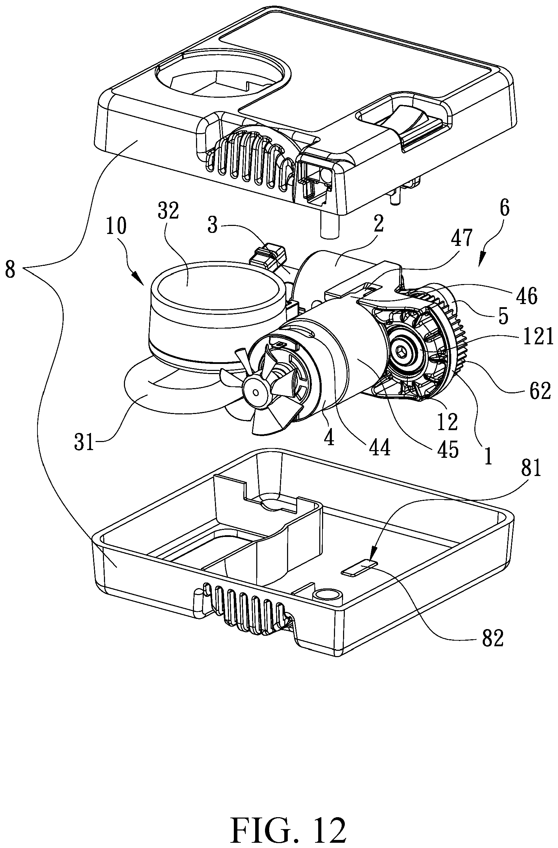

With reference to FIG. 12, an air compressor 10 is received in an accommodation box 8. Referring to FIGS. 1-3, the air compressor 10 comprises a body 1, a cylinder 2 connected on the body 1, a motor 4 fixed on the body 1, and a piston 5 driven by the motor 4 to move in the cylinder 2 reciprocately.

The body 1 includes multiple positioning orifices which are a first positioning orifice 11 and a second positioning orifice 12, wherein a small gear 61 is received in the first positioning orifice 11 and is connected on an end of the motor 4, and a connection seat 41 of the motor 4 is accommodated in the first orifice 11. The second positioning orifice 12 is configured to receive a bearing 121. The motor 4 further includes two dissipation holes 43 symmetrically formed on an outer wall of the casing thereof and configured to circulate airs and to dissipate heat from the motor 4. The motor 4 includes a magnetic coil 44 fitted thereon and made of metal material so as to guide magnetism efficiently, when the motor 4 operates.

The cylinder 2 is one-piece connected on the body 1 and is in communication with an air storage holder 3, wherein the air storage holder 3 includes at least one tube 30 in which an air hose 31 and a pressure gauge 32 are received.

A transmission mechanism 6 includes a large gear 62 having a counterweight block and configured to mesh with the small gear 61, wherein the large gear 62 is connected with a bearing 121 by using a shaft (not shown), and the transmission mechanism 6 actuates the piston 5 to move in the cylinder 2 reciprocately so as to produce compressed airs.

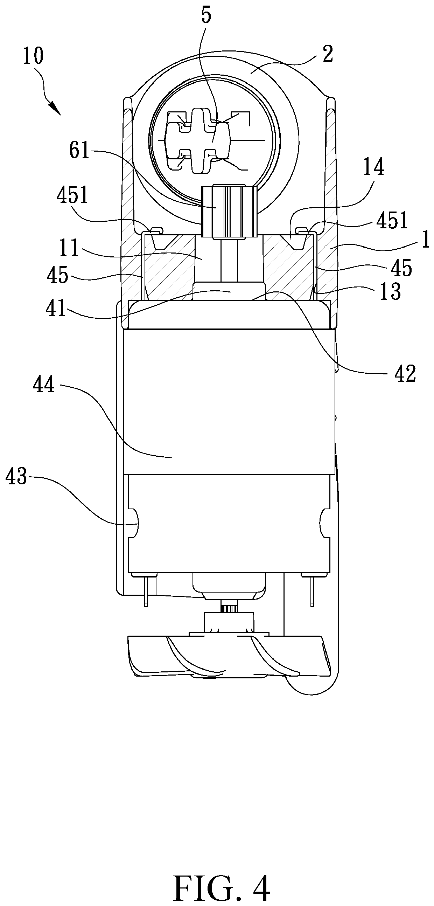

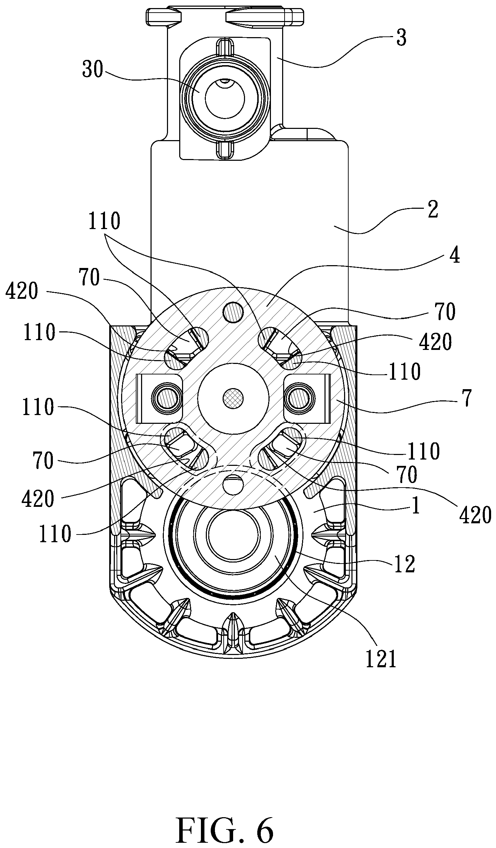

FIGS. 1-6 depict an air compressor that does not form part of the invention, but whose description is useful for understanding the invention. The motor 4 includes multiple coupling orifices 420 defined on an head edge 42 thereof adjacent to small gear 61 and surrounding the connection seat 41, and the body 1 includes multiple posts 110 extending from a first outer wall thereof, surrounding the first positioning orifice 11, and corresponding to the multiple coupling orifices 420, such that when fixing the motor 4 to the body 1, the multiple coupling orifices 420 of the head edge 42 of the motor 4 are engaged on the multiple posts 110 of the body 1 so as to enhance rotating force of the motor 4 and to fix the motor 4 on the body 1 securely. Furthermore, a coupling face 7 has multiple through orifices 70 formed thereon, when the multiple posts 110 of the body 1 are engaged with the multiple coupling orifices 420 of the head edge 42 of the motor 4, as shown in FIG. 6, the connection seat 41 of the head edge 42 of the motor 1 is accommodated in the first positioning orifice 11, wherein the body 1 is engaged with the motor 4 by using at least one locking extensions 45, for example, a first end of a respective one locking extension 45 extends from the motor 4, and a second end of the respective one locking extension 45 is engaged on the body 1, hence the motor 4 is fixed on the body 1 securely without using any screws.

With reference to FIGS. 1-4, the two locking extensions 45 symmetrically extend from the head edge 42 of the motor 4, the body 1 further includes two recesses 13 passing therethrough vertically, and the body 1 includes two notches 14 symmetrically defined on two sides thereof and located inside the two recesses 13, wherein the two locking extensions 45 extend through the two recesses 13 of the body 1, and two distal ends of the two locking extensions 45 are forced by a pressing tool (not shown) to form two symmetrical contact wings 451 for contacting with the body 1, thus fixing the motor 4 on the body 1 without using any screws.

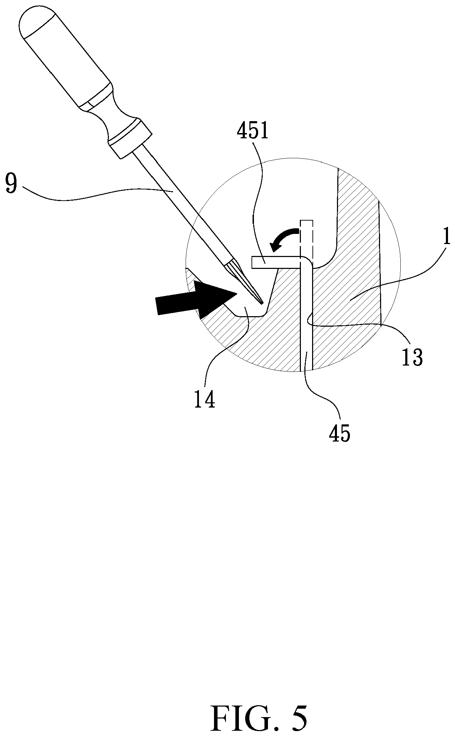

Referring further to FIG. 5, when the motor 4 is removed from the body 1 by ways of a removal tool 9, the removal tool 9 is inserted into the a respective one notch 14 of the body 1 and pushes a respective one contact wing 451 of a respective one locking extension 45 away from the body 1, then the motor 4 is moved away from the body 1, wherein the removal tool 9 is a screwdriver.

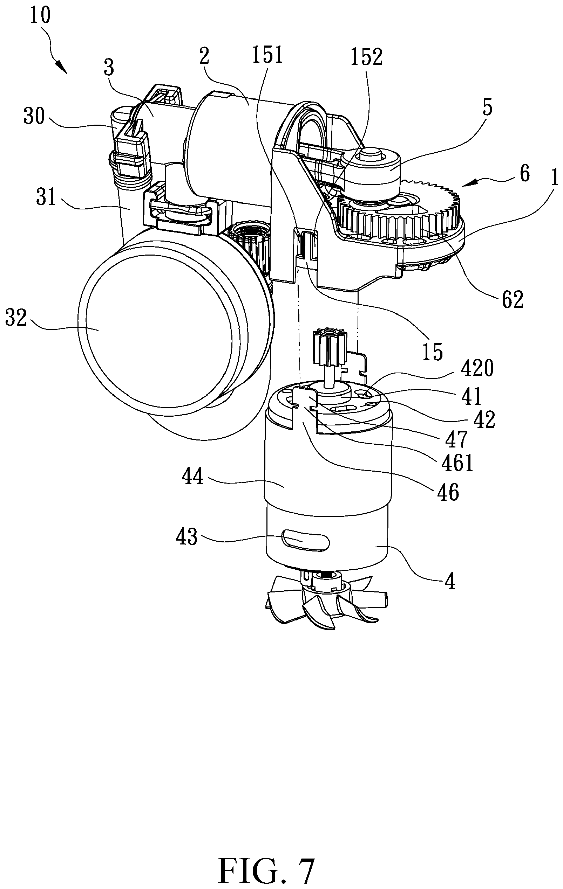

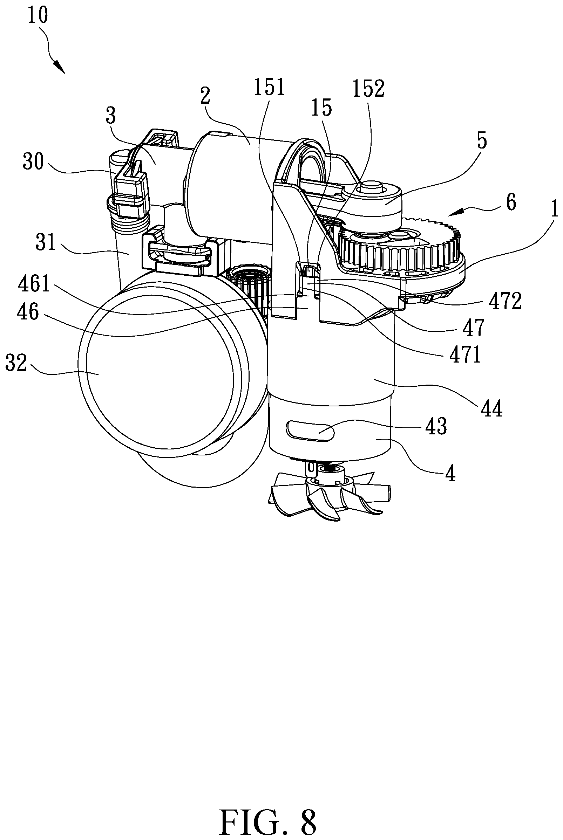

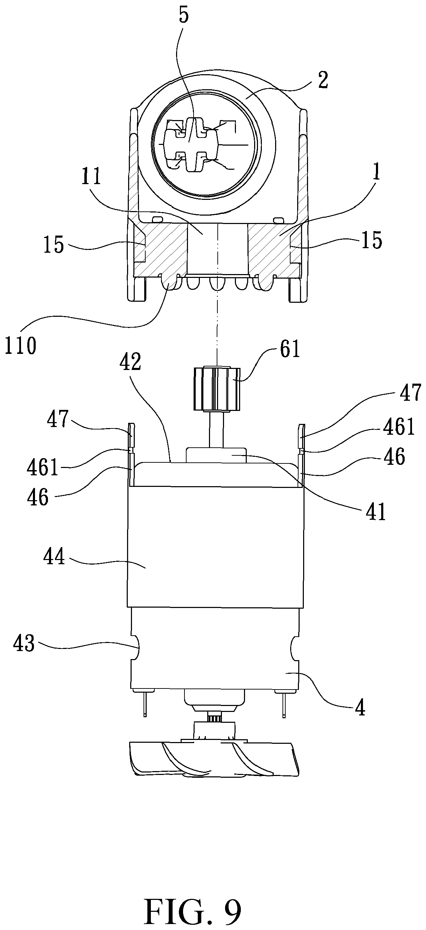

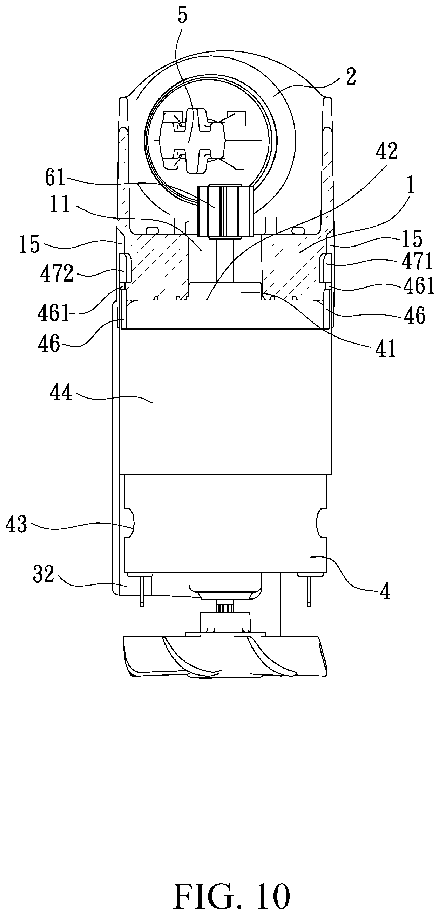

As illustrated in FIGS. 7 to 10, a difference from the previously described air compressor is that it comprises: the motor 4 including two locking extensions 46 symmetrically extending from the magnetic coil 44 which is fitted on the motor 4, wherein a respective one locking extension 46 has a neck 461 formed on a distal end thereof, wherein a width of the neck 461 is less than a width of the respective one locking extension 46, and the neck 461 has a wing 47 extending from a distal end thereof, wherein a width of the wing 47 is equal to the width of the respective one locking extension 46, and the body 1 further includes two receiving grooves 15 defined on two sides thereof and corresponding to two wings 47 of the two locking extensions 46, wherein the two receiving grooves 15 are a first receiving groove 151 and a second receiving groove 152, and the two wings 47 are located at the two receiving grooves 15 of the body 1, wherein a pressing tool (not shown) is configured to press the two wings 47 into the first receiving groove 151 and the second receiving groove 152 of the two receiving grooves 15 to form a first bent tab 471 and a second bent tab 472, wherein the first bent tab 471 and the second bent tab 472 are pressed into the two receiving grooves 15, hence the motor 4 is fixed on the body 1 without using any screws.

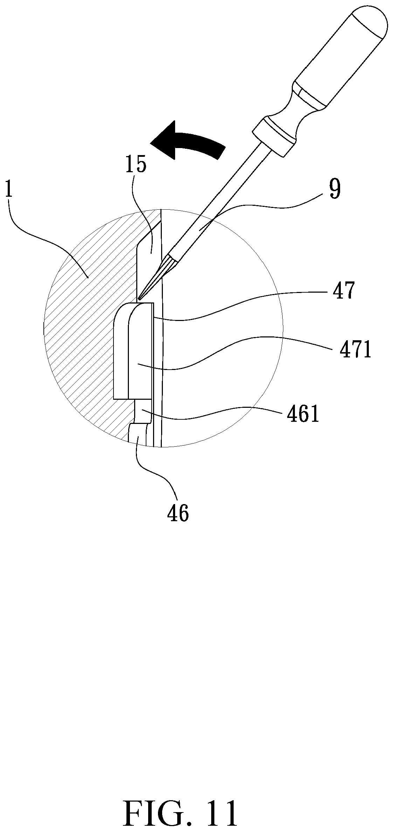

As shown in FIG. 11, the motor 4 is removed from the body 1 by ways of a removal tool 9, wherein the removal tool 9 is inserted into the two receiving groove 15 of the body 1 to move the first bent tab 471 and the second bent tab 472 of the two locking extensions 46 away from of the body 1, and the motor 4 is removed from the body 1 easily and quickly.

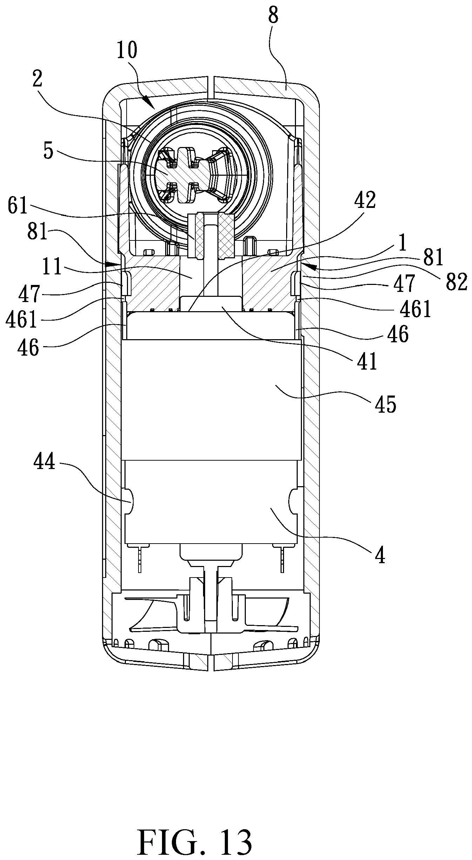

With reference to FIGS. 12 and 13, the air compressor 10 is received in the accommodation box 8, wherein two abutting portions 81 are formed on an inner wall of a first casing and an inner wall of a second casing of the accommodation box 8, and the two abutting portions 81 are two protrusions 82 of the accommodation box 8 configured to limit the two wings 47 of the two locking extensions 46 between the motor 4 and the body 1, hence the air compressor 10 is received in the accommodation box 8 stably by using the two wings 47.

Thereby, the motor 4 includes the multiple coupling orifices 420 configured to engage on the multiple posts 110 of the body 1 so as to fix the motor 4 on the body 1 and to enhance the rotating force of the motor 4.

Preferably, the motor 4 includes at least one locking extension 45 configured to engage with the body 1, thus fixing the motor 4 on the body 1 securely without using any screws.

The air compressor 10 is received in the accommodation box 8, wherein the two abutting portions 81 are formed on the inner wall of the first casing and the inner wall of the second casing of the accommodation box 8, such that the two wings 47 of the two locking extensions 46 are defined between the motor 4 and the body 1, and the air compressor 10 is received in the accommodation box 8 stably by using the two wings 47.

## Claims

1. An air compressor (10) comprising:
an accommodation box (8);
a body (1) received in the accommodation box (8), and the body (1) including multiple positioning orifices which are a first positioning orifice (11) and a second positioning orifice (12);
a cylinder (2) received in the accommodation box (8), connected on the body (1) and communicating with an air storage holder (3);
a motor (4) received in the accommodation box (8), fixed on the body (1), a small gear (61) of the motor (4) being received in the first positioning orifice (11), and a connection seat (41) of the motor (4) being accommodated in the first positioning orifice (11), wherein the motor (4) includes a magnetic coil (44) fitted thereon and
made of metal material so as to guide magnetism efficiently, when the motor (4) operates; and
a transmission mechanism (6) received in the accommodation box (8), actuating a piston (5) to move in the cylinder (2) reciprocally so as to produce compressed airs;
**characterized in that**:
the motor (4) includes at least one locking extension (45) configured to engage the motor (4) with the body (1), hence the motor (4) is fixed on the body (1) securely without using any screws,
wherein the motor (4) includes two locking extensions (46) symmetrically extending from the magnetic coil (44) which is fitted on the motor (4), wherein a respective one locking extension (46) has a neck (461) formed on a distal end thereof, a width of the neck (461) is less than a width of the respective one locking extension (46), and the neck (461) has a wing (47) extending from a distal end thereof, wherein a width of the wing (47) is equal to the width of the respective one locking extension (46), wherein the body (1) further includes two receiving grooves (15) defined on two sides thereof and corresponding to two wings (47) of the two locking extensions (46), the two receiving grooves (15) are a first receiving groove (151) and a second receiving groove (152), and the two wings (47) are located at the two receiving grooves (15) of the body (1), wherein
the two wings (47) are configured to be pressed into the first receiving groove (151) and the second receiving groove (152) of the two receiving grooves (15) to form a first bent tab (471) and a second bent tab (472), and the first bent tab (471) and the second bent tab (472) are pressed into the two receiving grooves (15), hence the motor (4) is fixed on the body (1) without using any screws, wherein two abutting portions (81) are formed on an inner wall of a first casing and an inner wall of a second casing of the accommodation box (8), and the two abutting portions (81) are two protrusions (82) of the accommodation box (8) respectively configured to limit one of the two wings (47) of the two locking extensions (46) between the motor (4) and the body (1), hence the air compressor (10) is received in the accommodation box (8) stably by using the two wings (47).

2. The air compressor (10) as claimed in claim 1, **characterized in that** the motor (4) further includes two dissipation holes (43) symmetrically formed on an outer wall of the casing thereof and configured to circulate airs and to dissipate heat from the motor (4).

3. The air compressor (10) as claimed in claim 1, **characterized in that** the motor (4) includes multiple coupling orifices (420) defined on an head edge (42) thereof adjacent to small gear (61) and surrounding the connection seat (41), and the body (1) includes multiple posts (110) extending from a first outer wall thereof, surrounding the first positioning orifice (11), and corresponding to the multiple coupling orifices (420), such that when fixing the motor (4) to the body (1), the multiple coupling orifices (420) of the head edge (42) of the motor (4) are engaged on the multiple posts (110) of the body (1) so as to enhance a rotating force of the motor (4) and to fix the motor (4) on the body (1) securely.

4. The air compressor (10) as claimed in claim 3, **characterized in that** a coupling face (7) has multiple through orifices (70) formed thereon, when the multiple posts (110) of the body (1) are engaged with the multiple coupling orifices (420) of the head edge (42) of the motor (4), and the connection seat (41) of the head edge (42) of the motor (1) is accommodated in the first positioning orifice (11).

5. The air compressor (10) as claimed in claim 1, **characterized in that** the first bent tab (471) and the second bent tab (472) of the two locking extensions (46) are configured to be pressed away from the body (1) so as to remove the motor (4) from the body (1) easily and quickly.

## Patentansprüche

1. Luftkompressor (10), umfassend:
einen Unterbringungskasten (8);
einen Körper (1), der in dem Unterbringungskasten (8) aufgenommen ist, wobei der Körper (1) mehrere Positionierungsöffnungen aufweist, die eine erste Positionierungsöffnung (11) und eine zweite Positionierungsöffnung (12) sind;
einen Zylinder (2), der in dem Unterbringungskasten (8) aufgenommen ist, mit dem Körper (1) verbunden ist und mit einem Luftspeicherhalter (3) in Verbindung steht;
einen Motor (4), der in dem Unterbringungskasten (8) aufgenommen und an dem Körper (1) befestigt ist, wobei ein kleines Zahnrad (61) des Motors (4) in der ersten Positionierungsöffnung (11) aufgenommen ist und ein Verbindungssitz (41) des Motors (4) in der ersten Positionierungsöffnung (11) untergebracht ist, wobei der Motor (4) eine Magnetspule (44) enthält, die daran angebracht ist und aus einem Metallmaterial gefertigt ist, um den Magnetismus effizient zu leiten, wenn der Motor (4) arbeitet; und
einen Übertragungsmechanismus (6), der in dem Unterbringungskasten (8) aufgenommen ist und einen Kolben (5) betätigt, um sich in dem Zylinder (2) hin und her zu bewegen, um Druckluft zu erzeugen;
**dadurch gekennzeichnet, dass**:
der Motor (4) mindestens einen Verriegelungsfortsatz (45) aufweist, der so konfiguriert ist,
dass er den Motor (4) mit dem Körper (1) in Eingriff bringt, so dass der Motor (4) ohne Verwendung von Schrauben sicher am Körper (1) befestigt ist,
wobei der Motor (4) zwei Verriegelungsfortsätze (46) umfasst, die sich symmetrisch von der Magnetspule (44) erstrecken, die an dem Motor (4) angebracht ist, wobei ein jeweiliger Verriegelungsfortsatz (46) einen Hals (461) aufweist, der an einem distalen Ende desselben ausgebildet ist, wobei eine Breite des Halses (461) geringer ist als eine Breite des jeweiligen Verriegelungsfortsatzes (46), und der Hals (461) einen Flügel (47) aufweist, der sich von einem distalen Ende desselben erstreckt, wobei eine Breite des Flügels (47) gleich der Breite des jeweiligen einen Verriegelungsfortsatzes (46) ist, wobei der Körper (1) ferner zwei Aufnahmenuten (15) aufweist, die auf zwei Seiten desselben definiert sind und zwei Flügeln (47) der zwei Verriegelungsfortsätze (46) entsprechen, wobei die zwei Aufnahmenuten (15) eine erste Aufnahmenut (151) und eine zweite Aufnahmenut (152) sind, und sich die zwei Flügel (47) an den zwei Aufnahmenuten (15) des Körpers (1) befinden, wobei die zwei Flügel (47) so konfiguriert sind, dass sie in die erste Aufnahmenut (151) und die zweite Aufnahmenut (152) der zwei Aufnahmenuten (15) gedrückt werden, um eine erste gebogene Lasche (471) und eine zweite gebogene Lasche (472) zu bilden, und die erste gebogene Lasche (471) und die zweite gebogene Lasche (472) in die beiden Aufnahmenuten (15) gepresst werden, so dass der Motor (4) ohne Verwendung irgendwelcher Schrauben an dem Körper (1) befestigt ist, wobei zwei Anschlagabschnitte (81) an einer Innenwand eines ersten Gehäuses und einer Innenwand eines zweiten Gehäuses des Unterbringungskastens (8) ausgebildet sind, und die beiden Anschlagabschnitte (81) zwei Vorsprünge (82) des Unterbringungskastens (8) sind, die jeweils so konfiguriert sind, dass sie einen der beiden Flügel (47) der beiden Verriegelungsfortsätze (46) zwischen dem Motor (4) und dem Körper (1) begrenzen, so dass der Luftkompressor (10) durch Verwendung der beiden Flügel (47) stabil in dem Unterbringungskasten (8) aufgenommen ist.

2. Luftkompressor (10) gemäß Anspruch 1, **dadurch gekennzeichnet, dass** der Motor (4) ferner zwei Ableitungslöcher (48) enthält, die symmetrisch an einer Außenwand seines Gehäuses ausgebildet und so konfiguriert sind, dass sie Luft zirkulieren und Wärme vom Motor (4) ableiten.

3. Luftkompressor (10) gemäß Anspruch 1, **dadurch gekennzeichnet, dass** der Motor (4) mehrere Kupplungsöffnungen (420) aufweist, die an einer Kopfkante (42) desselben angrenzend an kleines Zahnrad (61) definiert sind und den Verbindungssitz (41) umgeben, und dass der Körper (1) mehrere Pfosten (110) aufweist, die sich von einer ersten Außenwand desselben erstrecken, die erste Positionierungsöffnung (11) umgeben, und den mehreren Kupplungsöffnungen (420) entsprechen, so dass beim Befestigen des Motors (4) an dem Körper (1) die mehreren Kupplungsöffnungen (420) der Kopfkante (42) des Motors (4) mit den mehrfachen Pfosten (110) des Körpers (1) in Eingriff stehen, um eine Drehkraft des Motors (4) zu verstärken und den Motor (4) sicher an dem Körper (1) zu befestigen.

4. Luftkompressor (10) gemäß Anspruch 3, **dadurch gekennzeichnet, dass** eine Kupplungsfläche (7) mehrere darauf ausgebildete Durchgangsöffnungen (70) aufweist, wenn die mehreren Pfosten (110) des Körpers (1) mit den mehreren Kupplungsöffnungen (420) der Kopfkante (42) des Motors (4) in Eingriff stehen, und der Verbindungssitz (41) der Kopfkante (42) des Motors (1) in der ersten Positionierungsöffnung (11) untergebracht ist.

5. Luftkompressor (10) gemäß Anspruch 1, **dadurch gekennzeichnet, dass** die erste gebogene Lasche (471) und die zweite gebogene Lasche (472) der beiden Verriegelungsfortsätze (46) so konfiguriert sind, dass sie von dem Körper (1) weggedrückt werden können, um den Motor (4) leicht und schnell von dem Körper (1) zu entfernen.

## Revendications

1. Un compresseur d'air (10) comprenant :
une boîte de logement (8) ;
un corps (1) reçu dans la boîte de logement (8), et le corps (1) comprenant une pluralité d'orifices de positionnement qui sont un premier orifice de positionnement (11) et un deuxième orifice de positionnement (12) ;
un cylindre (2) reçu dans la boîte de logement (8), relié au corps (1) et communiquant avec un support de stockage d'air (3) ;
un moteur (4) reçu dans la boîte de logement (8), fixé sur le corps (1), un petit engrenage (61) du moteur (4) étant reçu dans le premier orifice de positionnement (11), et un siège de connexion (41) du moteur (4) étant reçu dans le premier orifice de positionnement (11), le moteur (4) incluant une bobine magnétique (44) montée sur lui et réalisée en matériau métallique de manière à guider efficacement le magnétisme, lorsque le moteur (4) fonctionne ; et
un mécanisme de transmission (6) reçu dans la boîte de logement (8), actionnant un piston (5) de façon à se déplacer dans le cylindre (2) en va-et-vient de manière à produire de l'air comprimé ;
**caractérisé en ce que** :
le moteur (4) comprend au moins une extension de verrouillage (45) configurée pour mettre en prise le moteur (4) avec le corps (1), de sorte que le moteur (4) soit fixé sur le corps (1) de manière sécurisée sans utiliser de vis,
le moteur (4) comprenant deux extensions de verrouillage (46) s'étendant symétriquement à partir de la bobine magnétique (44) qui est montée sur le moteur (4), une extension de verrouillage respective (46) ayant un col (461) formé sur une extrémité distale d'elle-même, une largeur du col (461) étant inférieure à une largeur de l'extension de verrouillage respective (46), et le col (461) possédant une aile (47) qui s'étend à partir d'une extrémité distale de lui-même, une largeur de l'aile (47) étant égale à la largeur de l'extension de verrouillage (46) respective, le corps (1) comprenant en outre deux rainures de réception (15) définies sur deux côtés de lui-même et correspondant à deux ailes (47) des deux extensions de verrouillage (46),
les deux rainures de réception (15) étant une première rainure de réception (151) et une deuxième rainure de réception (152), et les deux ailes (47) étant situées au niveau des deux rainures de réception (15) du corps (1), les deux ailes (47) étant configurées pour être enfoncées dans la première rainure de réception (151) et la deuxième rainure de réception (152) des deux rainures de réception (15) de façon à former une première languette pliée (471) et une deuxième languette pliée (472), et la première languette pliée (471) et la deuxième languette pliée (472) étant enfoncées dans les deux rainures de réception (15), le moteur (4) étant ainsi fixé sur le corps (1) sans utiliser de vis, deux parties contiguës (81) étant formées sur une paroi interne d'une première partie de boîte et une paroi interne d'une deuxième partie de boîte de la boîte de logement (8), et les deux parties contiguës (81) sont deux saillies (82) de la boîte de logement (8) respectivement configurées pour limiter l'une des deux ailes (47) des deux extensions de verrouillage (46) entre le moteur (4) et le corps (1), le compresseur d'air (10) étant ainsi reçu dans la boîte de logement (8) de manière stable en utilisant les deux ailes (47).

2. Le compresseur d'air (10) selon la revendication 1, **caractérisé en ce que** le moteur (4) comprend en outre deux trous de dissipation (43) formés symétriquement sur une paroi externe de son boîtier et configurés pour faire circuler des flux d'air et dissiper la chaleur du moteur (4).

3. Le compresseur d'air (10) selon la revendication 1, **caractérisé en ce que** le moteur (4) comprend une pluralité d'orifices de liaison (420) définis sur un bord de tête (42) de celui-ci adjacent à un petit engrenage (61) et entourant le siège de connexion (41), et le corps (1) comprend une pluralité de montants (110) s'étendant à partir d'une première paroi externe de celui-ci, entourant le premier orifice de positionnement (11), et correspondant à la pluralité d'orifices de liaison (420), de telle sorte que lors de la fixation du moteur (4) au corps (1), les orifices de la pluralité d'orifices de liaison (420) du bord de tête (42) du moteur (4) sont engagés sur les montants de pluralité de montants (110) du corps (1) de manière à favoriser une force de rotation du moteur (4) et à fixer solidement le moteur (4) sur le corps (1).

4. Le compresseur d'air (10) selon la revendication 3, **caractérisé en ce qu'**une face de liaison (7) présente une pluralité d'orifices traversants (70) formés sur elle, lorsque les montants de la pluralité de montants (110) du corps (1) sont en prise avec les orifices de la pluralité d'orifices de liaison (420) du bord de tête (42) du moteur (4), et que le siège de connexion (41) du bord de tête (42) du moteur (1) est logé dans le premier orifice de positionnement (11).

5. Le compresseur d'air (10) selon la revendication 1, **caractérisé en ce que** la première languette pliée (471) et la deuxième languette pliée (472) des deux extensions de verrouillage (46) sont conçues de façon à être repoussées du corps (1) de manière à retirer le moteur (4) du corps (1) facilement et rapidement.
